(19) Europäisches Patentamt
European Patent Office
Office européen des brevets

(11) **EP 2 928 686 B1**

(12) # EUROPÄISCHE PATENTSCHRIFT

(45) Veröffentlichungstag und Bekanntmachung des Hinweises auf die Patenterteilung:
**26.12.2018 Patentblatt 2018/52**

(21) Anmeldenummer: **13789321.0**

(22) Anmeldetag: **12.11.2013**

(51) Int Cl.:
***B32B 17/10*** $^{(2006.01)}$

(86) Internationale Anmeldenummer:
**PCT/EP2013/073575**

(87) Internationale Veröffentlichungsnummer:
**WO 2014/086555 (12.06.2014 Gazette 2014/24)**

(54) **VERSCHEIBUNG MIT ELEKTRISCH SCHALTBAREN OPTISCHEN EIGENSCHAFTEN**
COMPOUND GLAZING WITH ELECTRICALLY SWITCHABLE OPTICAL PROPERTIES
VITRAGE DOTÉ DE PROPRIÉTÉS OPTIQUES COMMUTABLES ÉLECTRIQUEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.12.2012 EP 12195799**

(43) Veröffentlichungstag der Anmeldung:
**14.10.2015 Patentblatt 2015/42**

(73) Patentinhaber: **Saint-Gobain Glass France**
**92400 Courbevoie (FR)**

(72) Erfinder: **MENNIG, Julius**
**F-60200 Compiègne (FR)**

(74) Vertreter: **Gebauer, Dieter Edmund**
**Splanemann**
**Patentanwälte Partnerschaft**
**Rumfordstraße 7**
**80469 München (DE)**

(56) Entgegenhaltungen:
**WO-A1-2011/036010**
**WO-A1-2012/154663**
**DE-A1-102009 044 181**
**US-A1- 2010 294 366**

EP 2 928 686 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft eine Verscheibung mit elektrisch schaltbaren optischen Eigenschaften, ein Verfahren zu deren Herstellung und die Verwendung einer thermoplastischen Folie mit einem lumineszierenden Material in einer solchen Verscheibung.

Es sind Verglasungen, insbesondere Verbundscheiben mit elektrisch schaltbaren Funktionselementen bekannt. Die optischen Eigenschaften der Funktionselemente können durch eine angelegte Spannung verändert werden. Ein Beispiel hierfür sind elektrochrome Funktionselemente, die beispielsweise aus US 20120026573 A1 und WO 2012007334 A1 bekannt sind. Ein weiteres Beispiel sind SPD-Funktionselemente (suspended particle device), die beispielsweise aus EP 0876608 B1 und WO 2011033313 A1 bekannt sind. Durch die angelegte Spannung lässt sich die Transmission von sichtbarem Licht durch elektrochrome oder SPD-Funktionselemente steuern. Verglasungen mit solchen Funktionselementen können also auf komfortable Weise elektrisch abgedunkelt werden.

Viele schaltbare Funktionselemente weisen eine begrenzte Langzeitstabilität auf. Das gilt insbesondere für Funktionselemente in Verglasungen im Außenbereich, beispielsweise in Gebäudefassaden oder im Fahrzeugbereich, wo die Funktionselemente der Sonnenstrahlung ausgesetzt sind. Der ultraviolette Spektralanteil sowie der kurzwellige Anteil des sichtbaren Bereichs der Sonnenstrahlung, insbesondere Strahlung mit einer Wellenlänge kleiner etwa 410 nm, führen zu einer Alterung der Funktionselemente. Die Alterung kann sich beispielsweise in einer unästhetischen Verfärbung oder Farbänderung der Funktionselemente äußern, welche homogen oder auch inhomogen sein kann. Die Alterung kann aber auch zu einer Verschlechterung der Funktionalität des schaltbaren Funktionselementes führen, insbesondere zu einem verringerten Kontrast zwischen den Schaltzuständen.

Eine naheliegende Möglichkeit, das schaltbare Funktionselement vor UV-Strahlung und kurzwelliger sichtbarer Strahlung zu schützen, besteht im Einbringen eines UV-Blockers oder UV-Absorbers in die Verglasung, beispielsweise als Beschichtung oder eingelagert in eine Polymerfolie. Eine solche Lösung ist beispielweise aus WO 2012/154663 A1 bekannt. UV-Blocker filtern die ultraviolette Strahlung sowie Strahlung des kurzwelligen sichtbaren Bereichs aus der Sonnenstrahlung heraus. Dadurch wird das Funktionselement zwar vor Alterung geschützt, allerdings wird eine deutliche Farbänderung des durch die Verglasung tretenden Lichts ins Gelbe erzeugt. Eine solche Farbänderung ist unästhetisch und wird insbesondere von Automobilherstellern typischerweise nicht akzeptiert. Zudem setzen solche UV-Blocker die Transmission von sichtbarem Licht durch die Verglasung herab.

Die internationale Patentanmeldung WO 2011/036010 zeigt eine Verglasung mit einer integrierten Schalteinrichtung. Der Schichtaufbau verfügt über eine elektrochrome Schicht und eine Haftschicht mit lumineszierenden Partikeln zur optischen Markierung der Schalteinrichtung.

Die Aufgabe der vorliegenden Erfindung ist es, eine Verscheibung mit elektrisch schaltbaren optischen Eigenschaften bereitzustellen, welche einen Schutz des schaltbaren Funktionselements gegen Strahlung im UV-Bereich und im kurzwelligen sichtbaren Bereich aufweist. Die Verscheibung soll dabei eine hohe Transmission im sichtbaren Spektralbereich und eine geringe Farbänderung des durch sie hindurchtretenden Lichts aufweisen.

Die Aufgabe der vorliegenden Erfindung wird erfindungsgemäß durch eine Verscheibung mit elektrisch schaltbaren optischen Eigenschaften gemäß dem unabhängigen Anspruch 1 gelöst. Bevorzugte Ausführungen gehen aus den Unteransprüchen hervor.

Die erfindungsgemäße Verscheibung mit elektrisch schaltbaren optischen Eigenschaften umfasst zumindest die folgenden Merkmale:

- eine Außenscheibe und
- ein schaltbares Funktionselement, welches über zumindest eine thermoplastische Folie flächenmäßig mit der Außenscheibe verbunden ist,

wobei die thermoplastische Folie zumindest ein lumineszierendes Material enthält.

Die erfindungsgemäße Verscheibung (oder Scheibenanordnung) ist bevorzugt dafür vorgesehen, in einer Öffnung, beispielsweise eines Fahrzeugs oder eines Gebäudes, den Innenraum gegenüber der äußeren Umgebung abzutrennen. Die Außenscheibe ist dabei im Sinne der Erfindung in Einbaulage der äußeren Umgebung zugewandt. Das schaltbare Funktionselement ist innenraumseitig der Außenscheibe angeordnet. Das bedeutet, dass die Außenscheibe zwischen der äußeren Umgebung und dem schaltbaren Funktionselement angeordnet ist. Prinzipiell kann die erfindungsgemäße Verscheibung natürlich auch im Inneren eines Gebäudes eingesetzt werden, insbesondere wenn dort ein Schutz gegenüber UV-Strahlung erforderlich ist. Die Außenscheibe ist dann zwischen der UV-Strahlungsquelle und dem Funktionselement angeordnet.

Unter einer Verscheibung mit elektrisch schaltbaren optischen Eigenschaften wird im Sinne der Erfindung nicht nur eine Verscheibung bezeichnet, deren optische Eigenschaften, beispielsweise die Transmission von sichtbarem Licht, zwischen zwei diskreten Zuständen geschaltet werden können, beispielsweise einem opaken und einem transparenten Zustand. Es sind darunter auch solche Verscheibungen zu verstehen, deren optische Eigenschaften stufenlos

regelbar sind.

Die erfindungsgemäße Verscheibung enthält mindestens eine thermoplastische Folie, welche zumindest ein lumineszierendes Material enthält. Die thermoplastische Folie mit dem lumineszierenden Material ist erfindungsgemäß flächenmäßig zumindest zwischen der Außenscheibe und dem schaltbaren Funktionselement angeordnet. Die thermoplastische Folie kann weitere Bereiche umfassen, welche nicht zwischen der Außenscheibe und dem Funktionselement angeordnet sind. Die thermoplastische Folie kann beispielsweise über das Funktionselement überstehen.

Von der äußeren Umgebung durch die Verscheibung tretendes Sonnenlicht trifft also zunächst auf die thermoplastische Folie mit dem lumineszierenden Material und anschließend auf das Funktionselement. Typische thermoplastische Folien sind für ultraviolette Strahlung unterhalb einer bestimmten Grenzwellenlänge, welche vom thermoplastischen Material abhängt, nicht transparent. Dieser Teil des UV-Anteils der Sonnenstrahlung trifft daher nicht auf das Funktionselement und kann nicht zur Alterung führen. Die UV-Strahlung oberhalb der Grenzwellenlänge sowie kurzwellige Anteile des sichtbaren Spektralbereichs werden durch das lumineszierende Material absorbiert und können daher ebenfalls nicht (oder nur in deutlichem verringertem Maße) zu einer Alterung des Funktionselement führen. Unter kurzwelligen Anteilen des sichtbaren Bereichs wird im Sinne der Erfindung insbesondere Strahlung kleiner oder gleich 410 nm verstanden. Es hat sich gezeigt, dass ein Schutz des Funktionselements vor Strahlung insbesondere im Wellenlängenbereich von 380 nm bis 410 nm zu einer deutlich verminderten Alterung des Funktionselements führt.

Im Gegensatz zu herkömmlichen UV-Blockern wird die Strahlungsenergie jedoch nicht einfach aus der Sonnenstrahlung herausgefiltert. Stattdessen gibt das lumineszierende Material einen Teil der Strahlungsenergie als Lumineszenzstrahlung wieder ab, welche eine größere Wellenlänge aufweist als die absorbierte Strahlung. Im Vergleich zu herkömmlichen UV-Blockern wird dadurch zum einen eine geringere Farbänderung des durch die Verscheibung tretenden Lichts erreicht. Zum anderen wird eine höhere Transmission von sichtbarem Licht erreicht. Das sind große Vorteile der vorliegenden Erfindung.

Das elektrisch schaltbare Funktionselement umfasst zumindest eine aktive Schicht, welche die schaltbaren optischen Eigenschaften aufweist. Die aktive Schicht ist flächenmäßig zwischen einer äußeren und einer inneren transparenten Flächenelektrode angeordnet. Die äußere Flächenelektrode ist dabei der Außenscheibe zugewandt und die innere Flächenelektrode ist von der Außenscheibe abgewandt. Die Flächenelektroden und die aktive Schicht sind typischerweise parallel zu den Oberflächen der Außenscheibe angeordnet. Die Flächenelektroden sind mit einer externen Spannungsquelle auf an sich bekannte Art elektrisch verbunden. Die elektrische Kontaktierung ist durch geeignete Verbindungskabel, beispielsweise Folienleiter realisiert, welche optional über sogenannte Sammelleiter (bus bars), beispielsweise Streifen eines elektrisch leitfähigen Materials oder elektrisch leitfähige Aufdrucke, mit den Flächenelektroden verbunden sind.

Das schaltbare Funktionselement, bevorzugt die aktive Schicht des schaltbaren Funktionselements, enthält in einer vorteilhaften Ausgestaltung der Erfindung zumindest ein organisches Material, beispielsweise eine organische Matrix. Solche aktive Schichten sind besonders anfällig für eine Alterung durch UV-Strahlung. Durch die erfindungsgemäße thermoplastische Folie mit dem lumineszierenden Material werden solche Funktionselemente besonders effektiv vor Alterung geschützt.

Die erfindungsgemäße thermoplastische Folie enthält zumindest ein thermoplastisches Polymer, bevorzugt Ethylenvinylacetat (EVA) und / oder Polyvinylbutyral (PVB), besonders bevorzugt Polyvinylbutyral. Solche thermoplastischen Folien weisen eine geringe Transparenz im UV-Bereich auf und eignen sich gut zur Einlagerung von lumineszierenden Materialien. Die thermoplastischen Folie kann aber auch beispielsweise zumindest Polyurethan, Polyethylen, Polyethylenterephthalat, Polypropylen, Polycarbonat, Polymethylmetacrylat, Polyacrylat, Polyvinylchlorid, Polyacetatharz, Gießharze, Acrylate, Fluorinierte Ethylen-Propylene, Polyvinylfluorid und / oder Ethylen-Tetrafluorethylen enthalten.

Die Dicke der thermoplastischen Folie beträgt bevorzugt von 0,2 mm bis 2 mm, besonders bevorzugt von 0,3 mm bis 1 mm, beispielsweise 0,38 mm oder 0,76 mm. Das ist besonders vorteilhaft im Hinblick auf eine geringe Dicke der Verscheibung, eine stabile Verbindung zwischen Außenscheibe und Funktionselement und den Schutz vor UV-Strahlung und kurzwelligem sichtbaren Licht.

Der Begriff "lumineszierendes Material" im Sinne der Erfindung umfasst insbesondere lumineszierende Pigmente und lumineszierende Farbstoffe. Das lumineszierende Material kann beispielsweise als organische und/oder anorganische lumineszierende Verbindungen, Ionen, Aggregate und/oder Moleküle ausgebildet sein.

Das lumineszierende Material weist ein lokales Anregungsmaximum im Bereich von 350 nm bis 450 nm, besonders bevorzugt 380 nm bis 420 nm auf. Dadurch wird Strahlung im UV-Bereich und im kurzwelligen sichtbaren Bereich besonders vorteilhaft absorbiert.

Das lumineszierende Material weist bevorzugt ein lokales Emissionsmaximum im Bereich von 410 nm bis 600 nm, besonders bevorzugt 430 nm bis 500 nm auf. Das ist besonders vorteilhaft im Hinblick auf eine geringe Farbänderung des durch die Verscheibung tretenden Lichts.

Das lumineszierende Material enthält bevorzugt ein Hydroxyalkylterephthalat mit der Formel: $R_1$-COO-Ph(OH)$_x$-COO-$R_2$, wobei $R_1$, $R_2$ ein Alkyl- oder Allylrest mit 1 bis 10 C-Atomen ist, Ph ein Phenylring ist, OH eine am

Phenylring gebundene Hydroxylgruppe ist und x eine ganze Zahl von 1 bis 4 ist. Die allgemeine Strukturformel ist:

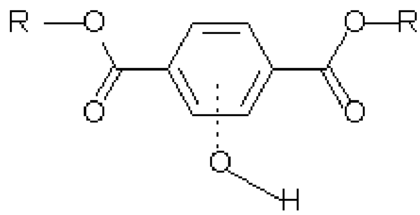

Solche lumineszierende Materialien weisen besonders vorteilhafte Absorptions- und Emissionseigenschaften auf, sind dauerhaft stabil und lassen sich gut in die thermoplastische Folie einlagern.

Das lumineszierende Material enthält bevorzugt Diethyl-2,5-dihydroxyterephthalat. Die Strukturformel ist:

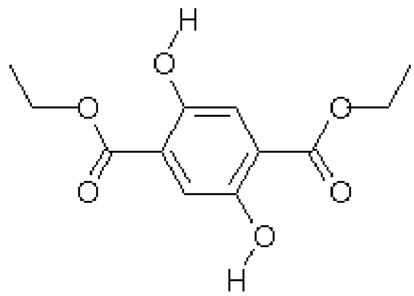

Damit werden besonders gute Ergebnisse erzielt.

Das lumineszierende Material kann aber auch beispielsweise Benzopyrane, Naphthopyrane, 2H-Naphthopyrane, 3H-Naphthopyrane, 2H-Phenanthropyrane, 3H-Phenanthropyrane, Photochrome Harze, Cumarine, Xanthine, Naphthalinsäurederivate, Oxazole, Stilbene, Styryle, Perylene, Naphthalimide, Naphthale, Phenyle, Xanthene, Lanthanoide, bevorzugt Y203:Eu, YV04:Tm, Y202S:Pr, Gd202S:Tb und / oder Gemische davon enthalten.

Das lumineszierende Material ist bevorzugt in der thermoplastischen Folie eingelagert. Die gemittelte Konzentration des lumineszierenden Materials in der thermoplastischen Folie beträgt von 0,1 $kg/m^3$ bis 20 $kg/m^3$, besonders bevorzugt von 1 $kg/m^3$ bis 7 $kg/m^3$. In diesem Bereich für die Konzentration des lumineszierenden Materials wird ein besonders effektiver Schutz des Funktionselements vor Alterung erzielt.

Das lumineszierende Material ist über die gesamte Fläche der thermoplastischen Folie homogen verteilt.

Die thermoplastische Folie enthält bevorzugt keine UV-Blocker. Unter einem UV-Blocker wird im Sinne der Erfindung ein Material verstanden, welches Strahlung im UV-Bereich und/oder im kurzwelligen sichtbaren Bereich absorbiert und die absorbierte Strahlungsenergie auf nicht-strahlende Weise, insbesondere durch thermische Relaxation abgibt. Eine thermoplastische Folie ohne UV-Blocker hat den besonderen Vorteil einer hohen Transmission im sichtbaren Spektralbereich und einer geringen Farbänderung des durch die Verscheibung tretenden Lichts.

Natürlich kann die erfindungsgemäße Verscheibung auch mehr als eine thermoplastische Folie mit lumineszierendem Material enthalten.

In einer Ausgestaltung der Erfindung ist das schaltbare Funktionselement enthalten in einer Mehrschichtfolie mit elektrisch schaltbaren optischen Eigenschaften. Die Mehrschichtfolie enthält das schaltbare Funktionselement flächenmäßig zwischen einer ersten und einer zweiten Trägerfolie. Die Mehrschichtfolie enthält in der angegebenen Reihenfolge zumindest eine Trägerfolie, eine Flächenelektrode, eine aktive Schicht, eine weitere Flächenelektrode und eine weitere Trägerfolie. Eine Trägerfolie ist zumindest über eine thermoplastische Folie mit der Außenscheibe verbunden, wobei die thermoplastische Folie zumindest das lumineszierende Material enthält. Der Vorteil liegt in einer einfachen Herstellung der Verscheibung. Das Funktionselement ist durch die Trägerfolien vorteilhaft vor Beschädigung, insbesondere Korrosion geschützt.

Die Trägerfolien enthalten bevorzugt zumindest ein thermoplastisches Polymer, besonders bevorzugt Polyethylenterephthalat (PET). Das ist besonders vorteilhaft im Hinblick auf die Stabilität der Mehrschichtfolie. Die Trägerfolien können aber auch beispielsweise Ethylenvinylacetat (EVA) und / oder Polyvinylbutyral (PVB), Polypropylen, Polycarbonat, Polymethylmetacrylat, Polyacrylat, Polyvinylchlorid, Polyacetatharz, Gießharze, Acrylate, Fluorinierte Ethylen-Propylene, Polyvinylfluorid und / oder Ethylen-Tetrafluorethylen enthalten. Die Dicke jeder Trägerfolie beträgt bevorzugt von 0,1 mm bis 1 mm, besonders bevorzugt von 0,1 mm bis 0,2 mm. Durch eine Trägerfolie mit einer solchen geringen Dicke wird die Gesamtdicke der Verscheibung nur unwesentlich erhöht.

In einer Ausgestaltung der Erfindung ist die Verscheibung eine Verbundscheibe aus der Außenscheibe und

einer Innenscheibe und dem flächenmäßig zwischen der Außenscheibe und der Innenscheibe angeordneten Funktionselement mit elektrisch schaltbaren optischen Eigenschaften. Mit Innenscheibe wird diejenige Scheibe bezeichnet, die in Einbaulage dem Innenraum zugewandt ist.

Ist die erfindungsgemäße Verscheibung eine Verbundscheibe, so ist in einer Ausgestaltung das schaltbare Funktionselement auf der innenseitigen Oberfläche der Innenscheibe aufgebracht. Mit der innenseitigen Oberfläche wird diejenige Oberfläche der Innenscheibe bezeichnet, die zur Außenscheibe hingewandt ist.

Ist die erfindungsgemäße Verscheibung eine Verbundscheibe, so ist in einer Ausgestaltung das schaltbare Funktionselement als Mehrschichtfolie mit elektrisch schaltbaren optischen Eigenschaften bereitgestellt. Die Mehrschichtfolie enthält das schaltbare Funktionselement flächenmäßig zwischen einer ersten und einer zweiten Trägerfolie. Eine Trägerfolie ist zumindest über eine erste thermoplastische Folie mit der Außenscheibe und die andere Trägerfolie über zumindest eine zweite thermoplastische Folie mit der Innenscheibe verbunden. Zumindest die erste thermoplastische Folie enthält dabei das lumineszierende Material. Die zweite thermoplastische Folie kann prinzipiell ebenfalls lumineszierendes Material enthalten. Bevorzugt enthält die zweite thermoplastische Folie kein lumineszierendes Material. Das ist vorteilhaft im Hinblick auf eine kostengünstige Herstellung der Verbundscheibe. Der Vorteil liegt in einer einfachen Herstellung der Verbundscheibe. Die Mehrschichtfolie mit elektrisch schaltbaren optischen Eigenschaften kann bei der Herstellung einfach in den Verbund eingelegt werden, welcher dann mit herkömmlichen Verfahren zur Verbundscheibe laminiert wird. Das Funktionselement ist durch die Trägerfolien vorteilhaft vor Beschädigung, insbesondere Korrosion geschützt und kann vor der Herstellung der Verbundscheibe auch in größerer Stückzahl bereitgestellt werden, was aus ökonomischen und verfahrenstechnischen Gründen wünschenswert sein kann.

Die Mehrschichtfolie mit elektrisch schaltbaren optischen Eigenschaften weist in einer vorteilhaften Ausgestaltung eine Randversiegelung auf. Die Randversiegelung verhindert die Diffusion von chemischen Bestandteilen der thermoplastischen Folien, beispielsweise Weichmacher, in die aktive Schicht. Dadurch wird die Alterung des schaltbaren Funktionselements vermindert. Die Randversiegelung ist beispielsweise als Polyimidhaltiger Film oder Folie ausgebildet, welche umlaufend um die Seitenkanten der Mehrschichtfolie verläuft.

Das Funktionselement kann prinzipiell jedes elektrisch schaltbare, dem Fachmann an sich bekannte Funktionselement sein. Die Erfindung ist natürlich insbesondere in Verbindung mit solchen Funktionselementen vorteilhaft, die unter Bestrahlung mit UV-Strahlung und/oder Strahlung im kurzwelligen sichtbaren Bereich altern, insbesondere Funktionselemente, welche organische Materialien enthalten.

In einer vorteilhaften Ausgestaltung der Erfindung ist die aktive Schicht des Funktionselements eine elektrochemisch aktive Schicht. Solche Funktionselemente sind als elektrochrome Funktionselemente bekannt. Die Transmission von sichtbarem Licht ist vom Einlagerungsgrad von Ionen in die aktive Schicht abhängig, wobei die Ionen beispielsweise durch eine Ionenspeicherschicht zwischen aktiver Schicht und einer Flächenelektrode bereitgestellt werden. Die Transmission kann durch die an die Flächenelektroden angelegte Spannung, welche eine Wanderung der Ionen hervorruft, beeinflusst werden. Geeignete funktionelle Schichten enthalten beispielsweise zumindest Wolframoxid oder Vanadiumoxid. Elektrochrome Funktionselemente sind beispielsweise aus WO 2012007334 A1, US 20120026573 A1, WO 2010147494 A1 und EP 1862849 A1 bekannt.

In einer weiteren vorteilhaften Ausgestaltung der Erfindung enthält die aktive Schicht des Funktionselements Flüssigkristalle, welche beispielsweise in eine Polymermatrix eingelagert sind. Solche Funktionselemente sind als PDLC-Funktionselemente (Polymer dispersed liquid crystal) bekannt. Wird an die Flächenelektroden keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht. Ein solches Funktionselement ist beispielsweise aus DE 102008026339 A1 bekannt.

In einer weiteren vorteilhaften Ausgestaltung der Erfindung ist das Funktionselement ein elektrolumineszentes Funktionselement. Dabei enthält die aktive Schicht elektrolumineszente Materialen, welche anorganisch oder organisch (OLED) sein können. Durch Anlegen einer Spannung an die Flächenelektroden wird die Lumineszenz der aktiven Schicht angeregt. Solche Funktionselemente sind beispielsweise aus US 2004227462 A1 und WO 2010112789 A2 bekannt.

In einer weiteren vorteilhaften Ausgestaltung der Erfindung enthält die aktive Schicht des Funktionselements suspendierte Partikel, wobei die Absorption von Licht durch die aktive Schicht mittels Anlegen einer Spannung an die Flächenelektroden veränderbar ist. Solche Funktionelemente sind als SPD-Funktionselemente (suspended particle device) bekannt, beispielsweise aus EP 0876608 B1 und WO 2011033313 A1.

Das Funktionselement kann natürlich außer der aktiven Schicht und den Flächenelektroden weitere an sich bekannte Schichten aufweisen, beispielsweise Barriereschichten, Blockerschichten, Antireflexionsschichten, Schutzschichten und / oder Glättungsschichten.

Die Fläche des Funktionselements kann der Fläche der Verscheibung entsprechen. Dann wird eine vorteilhafte gleichmäßige Abdunklung der Verscheibung durch das schaltbare Funktionselement erreicht. Die Verscheibung kann alternativ aber auch einen umlaufenden Randbereich mit einer Breite von beispielsweise 2 mm bis 20 mm aufweisen, der nicht mit dem Funktionselement versehen ist, insbesondere wenn dieser Randbereich durch Befestigungselemente,

Rahmen oder Aufdrucke abgedeckt ist. Insbesondere wenn die Verscheibung als Verbundscheibe ausgebildet ist, ist das schaltbare Funktionselement dabei im Inneren der Zwischenschicht vorteilhaft vor Korrosion geschützt.

Die innere und / oder die äußere Flächenelektrode sind bevorzugt als transparente, elektrisch leitfähige Schichten ausgestaltet. Die Flächenelektroden enthalten bevorzugt zumindest ein Metall, eine Metalllegierung oder ein transparentes leitfähiges Oxid (transparent conducting oxide, TCO). Die Flächenelektroden können beispielsweise Silber, Gold, Kupfer, Nickel, Chrom, Wolfram, Indium-Zinnoxid (ITO), Gallium-dotiertes oder Aluminium-dotiertes Zinkoxid und / oder Fluor-dotiertes oder Antimon-dotiertes Zinnoxid enthalten. Die Flächenelektroden weisen bevorzugt eine Dicke von 10 nm bis 2 μm auf, besonders bevorzugt von 20 nm bis 1 μm, ganz besonders bevorzugt von 30 nm bis 500 nm.

Die Außenscheibe und / oder gegebenenfalls die Innenscheibe enthalten bevorzugt nichtvorgespanntes, teilvorgespanntes oder vorgespanntes Glas, besonders bevorzugt Flachglas, Floatglas, Quarzglas, Borosilikatglas, Kalk-Natron-Glas oder klare Kunststoffe, besonders bevorzugt starre klare Kunststoffe, insbesondere Polyethylen, Polypropylen, Polycarbonat, Polymethylmethacrylat, Polystyrol, Polyamid, Polyester, Polyvinylchlorid und / oder Gemische davon. Die Außenscheibe und / oder die Innenscheibe sind können klar und transparent sein und beispielsweise eine Transmission im sichtbaren Spektralbereich von mindestens 70 %, bevorzugt mindestens 85 % aufweisen. Die Außenscheibe und / oder die Innenscheibe können aber auch getönt oder gefärbt sein und beispielsweise eine Transmission im sichtbaren Spektralbereich von 20 % bis 70 % aufweisen.

Die Dicke der Außenscheibe und gegebenenfalls der Innenscheibe kann breit variieren und so den Erfordernissen im Einzelfall angepasst werden. Die Außenscheibe und / oder die Innenscheibe weisen bevorzugt Dicken von 0,5 mm bis 15 mm, besonders bevorzugt von 1 mm bis 5 mm und ganz besonders bevorzugt von 1,5 mm bis 3 mm auf, beispielsweise 1,6 mm, 1,8 mm oder 2,1 mm.

Die Fläche der erfindungsgemäßen Verscheibung kann breit variieren, beispielsweise von 100 $cm^2$ bis 20 $m^2$. Bevorzugt weist die Verscheibung eine Fläche von 400 $cm^2$ bis 6 $m^2$ auf, wie sie für Verglasungen von Fahrzeugen und von Bau- und Architekturverglasungen üblich sind. Die Verscheibung kann eine beliebige dreidimensionale Form aufweisen. Die Verscheibung ist bevorzugt plan oder leicht oder stark in einer Richtung oder in mehreren Richtungen des Raumes gebogen.

Auf der von der Außenscheibe abgewandten Oberfläche der thermoplastischen Folie mit dem lumineszierenden Material ist in einer vorteilhaften Ausgestaltung der Erfindung eine Barrierefolie angeordnet. Die Barrierefolie verhindert vorteilhaft eine Diffusion des lumineszierenden Materials in andere Folien der Verscheibung. Die Barrierefolie enthält bevorzugt zumindest ein Polymer, welches bei den zur Herstellung und Verarbeitung der Verscheibung auftretenden Temperaturen nicht hinreichend weich wird, um eine Diffusion des lumineszierenden Materials zu ermöglichen. Die Barrierefolie kann beispielsweise zumindest PET enthalten.

In einer vorteilhaften Ausgestaltung ist zwischen dem schaltbaren Funktionselement und der Außenscheibe eine Infrarot-Schutzschicht angeordnet. Dadurch wird das Funktionselement vor infraroten Strahlungsanteilen des Sonnenlichts geschützt, welche eine Alterung hervorrufen können. Die Infrarot-Schutzschicht kann beispielsweise als Beschichtung auf der Außenscheibe oder einer polymeren Folie aufgebracht sein.

Die Außenscheibe, die Innenscheibe und / oder die Folien der Zwischenschicht können weitere geeignete, an sich bekannte Beschichtungen aufweisen, beispielsweise Antireflexbeschichtungen, Antihaftbeschichtungen, Antikratzbeschichtungen, photokatalytische Beschichtungen oder Wärmestrahlen reflektierende Beschichtungen (Low-E-Beschichtungen).

Die Transmission der erfindungsgemäßen thermoplastischen Folie mit dem lumineszierenden Material im Wellenlängenbereich von 380 nm bis 410 nm beträgt bevorzugt kleiner oder gleich 10%.

Die erfindungsgemäße Verscheibung weist bevorzugt einen TUV-Wert nach ISO 13837 (AM 1,5) von kleiner oder gleich 1% auf.

Die Aufgabe der Erfindung wird weiter durch ein Verfahren zur Herstellung einer Verscheibung mit elektrisch schaltbaren optischen Eigenschaften gelöst, wobei zumindest

a) mindestens ein lumineszierendes Materials auf oder in eine thermoplastische Folie aufgebracht oder eingebracht wird,

b) mindestens eine Außenscheibe, die thermoplastische Folie und ein schaltbares Funktionselement flächenmäßig in dieser Reihenfolge übereinander angeordnet werden und

c) das Funktionselement über die thermoplastische Folie mit der Außenscheibe verbunden wird.

Das lumineszierende Material kann in Verfahrensschritt (a) mit einem Lösungsmittel auf die thermoplastische Folie aufgetragen werden, beispielsweise durch Aufsprühen, Siebdruck, Offsetdruck, Tintenstrahldruck und/oder Flexodruck. Das Lösungsmittel enthält bevorzugt Alkohole, Ketone, Ester, Amine, Amide und/oder Gemische davon. Das Lösungsmittel enthält besonders bevorzugt Ethanol, Tetrahydrofuran und/oder Benzylalkohol. Der größte Anteil der Lösungsmittel geht durch Verdampfen nach dem Auftragen des lumineszierenden Materials verloren. Die Menge des aufgetragenen lumineszierenden Materials richtet sich nach der Dicke der thermoplastischen Folie. Es werden bevorzugt

0,1 g/m$^2$ bis 15 g/m$^2$ des lumineszierenden Materials auf die thermoplastische Folie aufgetragen, wenn die thermoplastische Folie eine Dicke von 0,76 mm aufweist, besonders bevorzugt von 1 g/m$^2$ bis 5 g/m$^2$. Beim Laminieren der thermoplastischen Folie zwischen der Außenscheibe und der Innenscheibe verteilt sich das lumineszierende Material bevorzugt gleichmäßig in der thermoplastischen Folie. Das Laminieren erfolgt bevorzugt bei Temperaturen von 120 °C bis 170 °C, einem Druck von 10 bar bis 15 bar und für einen Zeitraum von 30 min bis 240 min.

Das lumineszierende Material kann aber schon vor der Herstellung der thermoplastischen Folie mit dem thermoplastischen Ausgangsmaterial vermischt werden. Das lumineszierende Material wird dann gemeinsam mit dem thermoplastischen Ausgangsmaterial zur erfindungsgemäßen thermoplastischen Folie extrudiert und so in die thermoplastische Folie eingebracht.

In Verfahrensschritt (b) kann das Funktionselement beispielsweise auf eine Innenscheibe aufgebracht werden. Mindestens die Innenscheibe, die thermoplastische Folie und die Außenscheibe werden anschließend in der angegebenen Reihenfolge flächenmäßig aufeinander angeordnet, wobei die mit dem Funktionselement versehene Oberfläche der Innenscheibe zur thermoplastischen Folie hingewandt wird.

Alternativ kann das Funktionselement beispielsweise als Mehrschichtfolie mit elektrisch schaltbaren optischen Eigenschaften bereitgestellt werden, wobei das eigentliche Funktionselement zwischen einer ersten und einer zweiten Trägerfolie angeordnet ist. Die thermoplastische Folie kann auf die Außenscheibe und die Mehrschichtfolie auf die thermoplastische Folie aufgelegt werden. Soll eine Verbundscheibe hergestellt werden, so werden mindestens die Außenscheibe, eine erste thermoplastische Folie, die Mehrschichtfolie mit elektrisch schaltbaren optischen Eigenschaften, ein zweite thermoplastische Folie und eine Innenscheibe in der angegebenen Reihenfolge aufeinander angeordnet. Die erste thermoplastische Folie enthält erfindungsgemäß das lumineszierende Material. Die zweite thermoplastische Folie kann ein lumineszierendes Material enthalten oder auch nicht.

Die elektrische Kontaktierung der Flächenelektroden des schaltbaren Funktionselements erfolgt bevorzugt vor dem Verbinden der Außenscheibe und des Funktionselements zur erfindungsgemäßen Verscheibung.

Verfahrensschritt (c) erfolgt bevorzugt unter Einwirkung von Hitze, Vakuum und / oder Druck. Es können an sich bekannte Verfahren zur Lamination verwendet werden, beispielsweise Autoklavverfahren, Vakuumsackverfahren, Vakuumringverfahren, Kalanderverfahren, Vakuumlaminatoren oder Kombinationen davon.

Die erfindungsgemäße Verscheibung wird bevorzugt in Gebäuden, insbesondere im Zugangs- oder Fensterbereich oder in Fortbewegungsmitteln für den Verkehr auf dem Lande, in der Luft oder zu Wasser, insbesondere in Zügen, Schiffen und Kraftfahrzeugen beispielsweise als Heckscheibe, Seitenscheibe und / oder Dachscheibe verwendet.

Die erfindungsgemäße Verscheibung kann mit einer weiteren Scheibe zu einer Isolierverglasung verbunden sein.

Die Erfindung umfasst außerdem die Verwendung einer thermoplastischen Folie, welche zumindest ein lumineszierendes Material enthält, in einer Verscheibung mit elektrisch schaltbaren optischen Eigenschaften zum Schutz eines schaltbaren Funktionselements vor UV-Strahlung und Strahlung im kurzwelligen sichtbaren Bereich, insbesondere im Wellenlängenbereich von 380 nm bis 410 nm.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein. Es zeigen:

- Fig. 1 einen Querschnitt durch eine erste Ausgestaltung der erfindungsgemäßen Verscheibung mit elektrisch schaltbaren optischen Eigenschaften,
- Fig. 2 einen Querschnitt durch eine weitere Ausgestaltung der erfindungsgemäßen Verscheibung,
- Fig. 3 einen Querschnitt durch eine weitere Ausgestaltung der erfindungsgemäßen Verscheibung,
- Fig. 4 einen Querschnitt durch eine weitere Ausgestaltung der erfindungsgemäßen Verscheibung,
- Fig. 5 die Alterung von schaltbaren Funktionselementen ohne und mit Schutz vor UV-Strahlung und kurzwelliger Strahlung des sichtbaren Bereichs anhand eines Diagramms,
- Fig. 6 die Transmission von herkömmlichen und erfindungsgemäßen thermoplastischen Folien anhand eines Diagramms und
- Fig. 7 ein Ausführungsbeispiel des erfindungsgemäßen Verfahrens anhand eines Flussdiagramms.

Fig. 1 zeigt einen Querschnitt durch eine Ausgestaltung der erfindungsgemäßen Verscheibung mit elektrisch schaltbaren optischen Eigenschaften. Die Verscheibung umfasst eine Außenscheibe 1 und ist als Fensterverglasung beispielsweise eines Schaufensters vorgesehen. Die Außenscheibe besteht aus Kalk-Natron-Glas.

Die Verscheibung umfasst weiter ein schaltbares Funktionselement 4. Das Funktionselement 4 enthält eine aktive Schicht 5 zwischen einer äußeren Flächenelektrode 6 und einer inneren Flächenelektrode 7. Die Flächenelektroden 6, 7 sind über nicht dargestellte Sammelleiter und nicht dargestellte Verbindungskabel mit einer externen Spannungsversorgung verbunden. Das Funktionselement 4 war bei der Herstellung der Verbundscheibe als Mehrschichtfolie 8 mit elektrisch schaltbaren optischen Eigenschaften bereitgestellt. Die Mehrschichtfolie 8 umfasst das Funktionselement

4 zwischen einer ersten Trägerfolie 9 und einer zweiten Trägerfolie 10. Die Trägerfolien 9, 10 bestehen aus Polyethylenterephthalat (PET) und weisen eine Dicke von 0,125 mm auf. Das Funktionselement ist beispielsweise ein elektrochromes Funktionselement oder ein SPD-Funktionselement.

Die erste Trägerfolie 9 ist über eine thermoplastische Folie 12 aus Polyvinylbutyral (PVB) mit der Außenscheibe verbunden. Das Funktionselement 4 ist dabei innenraumseitig der Außenscheibe 1 angeordnet. Das bedeutet, dass in Einbaulage die Außenscheibe 1 der äußeren Umgebung und die Mehrschichtfolie 8 dem Gebäudeinnenraum zugewandt ist. In die thermoplastische Folie 12 ist ein lumineszierendes Material 3 mit einer Konzentration von etwa 3,9 kg/m$^3$ eingelagert ist. Das lumineszierende Material 3 ist Diethyl-2,5-dihydroxyterephtalat.

Fig. 2 zeigt einen Querschnitt durch eine Ausgestaltung der erfindungsgemäßen Verscheibung mit elektrisch schaltbaren optischen Eigenschaften. Die Verscheibung ist eine Verbundscheibe. Die Verbundscheibe umfasst eine Außenscheibe 1, die über eine Zwischenschicht 11 mit einer Innenscheibe 2 verbunden ist. Die Verbundscheibe ist als Bestandteil einer Fensterverglasung eines Gebäudes vorgesehen und in Einbaulage so angeordnet, dass die Außenscheibe 1 der äußeren Umgebung und die Innenscheibe 2 dem Gebäudeinnenraum zugewandt ist. Die Außenscheibe 1 und die Innenscheibe 2 bestehen aus Kalk-Natron-Glas und weisen Dicken von beispielsweise 1,6 mm auf.

In die Zwischenschicht 11 ist ein schaltbares Funktionselement 4 eingelagert. Das Funktionselement 4 ist beispielsweise ein PDLC-Funktionselement mit einer aktiven Schicht 5 zwischen einer äußeren Flächenelektrode 6 und einer inneren Flächenelektrode 7. Das Funktionselement 4 kann alternativ beispielsweise ein SPD-Funktionselement sein. Das Funktionselement 4 ist auf der zur Außenscheibe 1 hingewandten Oberfläche der Innenscheibe 2 angeordnet, wobei ein umlaufender Randbereich der Innenscheibe 2 nicht mit dem Funktionselement 4 versehen ist. Die Flächenelektroden 6, 7 sind über nicht dargestellte Sammelleiter und nicht dargestellte Verbindungskabel mit einer externen Spannungsversorgung verbunden. Die Flächenelektroden 6, 7 bestehen aus Indium-Zinnoxid (ITO) und weisen eine Dicke von etwa 100 nm auf. Die aktive Schicht 5 enthält Flüssigkristalle, welche in eine Polymermatrix eingelagert sind. Wird an die Flächenelektroden 6, 7 eine Spannung angelegt, so richten sich die Flüssigkristalle in einer gemeinsamen Richtung aus und die Streuung von Licht an den Flüssigkristallen wird herabgesetzt. Die optischen Eigenschaften der aktiven Schicht 5 sind daher elektrisch schaltbar.

Die Zwischenschicht 11 wird durch eine thermoplastische Folie 12 ausgebildet. Die thermoplastische Folie 12 besteht aus Polyvinylbutyral (PVB), in welches ein lumineszierendes Material 3 eingelagert ist. Die thermoplastischen Folie 12 weist eine Dicke von beispielsweise 0,76 mm auf. Das lumineszierende Material 3 ist Diethyl-2,5-dihydroxyterephtalat. Das lumineszierende Material 3 weist in der thermoplastischen Folie 12 eine Konzentration von etwa 3,9 kg/m$^3$ auf.

Im nicht mit dem Funktionselement 4 versehenen Randbereich ist die Innenscheibe 2 direkt über die thermoplastische Folie 12 mit der Außenscheibe 1 verklebt. Das Funktionselement ist somit vorteilhaft im Inneren der Zwischenschicht 11 vor Korrosion geschützt.

Fig. 3 zeigt einen Querschnitt durch eine weitere Ausgestaltung der erfindungsgemäßen Verscheibung mit elektrisch schaltbaren optischen Eigenschaften. Die Verscheibung ist eine Verbundscheibe. Die Verbundscheibe umfasst eine Außenscheibe 1, die über eine Zwischenschicht 11 mit einer Innenscheibe 2 verbunden ist. Die Verbundscheibe ist als Dachscheibe eines Kraftfahrzeugs vorgesehen und in Einbaulage so angeordnet, dass die Außenscheibe 1 der äußeren Umgebung und die Innenscheibe 2 dem Fahrzeuginnenraum zugewandt ist. Die Außenscheibe 1 und die Innenscheibe 2 bestehen aus Kalk-Natron-Glas und weisen Dicken von 2,1 mm auf.

In die Zwischenschicht 11 ist ein schaltbares Funktionselement 4 eingelagert. Das Funktionselement 4 ist ein SPD-Funktionselement mit einer aktiven Schicht 5 zwischen einer äußeren Flächenelektrode 6 und einer inneren Flächenelektrode 7. Die Flächenelektroden 6, 7 sind über nicht dargestellte Sammelleiter und nicht dargestellte Verbindungskabel mit einer externen Spannungsversorgung verbunden. Die Flächenelektroden 6, 7 bestehen aus Indium-Zinnoxid (ITO) und weisen eine Dicke von beispielsweise etwa 50 nm auf. Die aktive Schicht 5 enthält polarisierte Partikel suspendiert in einem Harz. In Abhängigkeit von der an die Flächenelektroden 6, 7 angelegten Spannung richten sich die suspendierten Partikel entlang einer gemeinsamen Raumrichtung aus. Durch die Ausrichtung der Partikel wird die Absorption von sichtbarem Licht herabgesetzt. Die Transmission von sichtbarem Licht durch die Verbundscheibe kann daher komfortabel elektrisch gesteuert werden.

Das Funktionselement 4 war bei der Herstellung der Verbundscheibe als Mehrschichtfolie 8 mit elektrisch schaltbaren optischen Eigenschaften bereitgestellt. Die Mehrschichtfolie 8 umfasst das Funktionselement 4 zwischen einer ersten Trägerfolie 9 und einer zweiten Trägerfolie 10. Die Trägerfolien 9, 10 bestehen aus Polyethylenterephthalat (PET) und weisen eine Dicke von 0,125 mm auf.

Die Mehrschichtfolie 8 ist über eine erste thermoplastische Folie 12 mit der Außenscheibe 1 und über eine zweite thermoplastische Folie 13 mit der Innenscheibe 2 verbunden. Die erste thermoplastische Folien 12 besteht aus Polyvinylbutyral (PVB) und weist eine Dicke von 0,76 mm auf. Die zweite thermoplastische Folien 13 besteht aus Ethylenvinylacetat (EVA) und weist eine Dicke von 0,38 mm auf. Die Zwischenschicht 11 umfasst also die erste thermoplastische Folie 12, die Mehrschichtfolie 8 (mit der ersten Trägerfolie 9, der äußeren Flächenelektrode 6, der aktiven Schicht 5, der inneren Flächenelektrode 9 und der zweiten Trägerfolie 10) und die zweite thermoplastische Folie 13.

In die erste thermoplastische Folie 12 ist ein lumineszierendes Material 3 eingelagert. Die thermoplastischen Folie 12 weist eine Dicke von beispielsweise 0,76 mm auf. Das lumineszierende Material 3 ist Diethyl-2,5-dihydroxyterephtalat. Das lumineszierende Material 3 weist in der thermoplastischen Folie 12 eine Konzentration von etwa 3,9 kg/$m^3$ auf. Durch das lumineszierende Material 3 beträgt die Transmission der thermoplastischen Folie 12 im Wellenlängenbereich von 380 nm bis 410 nm kleiner 10%.

Strahlungsanteile des durch die Verbundscheibe tretenden Sonnenlichtes im UV-Bereich und im kurzwelligen sichtbaren Bereich, insbesondere Strahlungsanteile mit Wellenlängen kleiner etwa 410 nm werden durch die thermoplastische Schicht 12 absorbiert. Diese Strahlungsanteile können daher nicht zu einer Alterung des Funktionselements 4 führen, wodurch die Langzeitstabilität des Funktionselements 4 vorteilhaft erhöht wird. Die durch das lumineszierende Material 3 absorbiert Strahlungsenergie wird als Fluoreszenz mit einer größeren Wellenlänge wieder abgegeben. Im Vergleich zur Verwendung von herkömmlichen UV-Blockern wird dadurch die Farbänderung des durch die Verbundscheibe tretenden Lichts verringert und die Transmission der Verbundscheibe erhöht. Das durch die thermoplastische Folie 12 mit dem lumineszierenden Material 3 ein verbesserter Schutz des Funktionselements 4 vor Alterung bereitgestellt wird, war für den Fachmann unerwartet und überraschend.

Fig. 4 zeigt einen Querschnitt durch eine weitere Ausgestaltung der erfindungsgemäßen Verscheibung mit elektrisch schaltbaren optischen Eigenschaften. Die Verscheibung ist eine Verbundscheibe. Die Außenscheibe 1, die Innenscheibe 2, die erste thermoplastische Folie 12, die zweite thermoplastische Folie 13 und die Mehrschichtfolie 8 sind wie in Figur 3 ausgebildet. Die Mehrschichtfolie 8 weist eine geringe Fläche als die Außenscheibe 1 und die Innenscheibe 2 auf, wobei ein umlaufender Randbereich der Verbundscheibe in Durchsicht nicht mit der Mehrschichtfolie 8 versehen ist. Die Mehrschichtfolie 8 erstreckt sich also nicht zu den Seitenkanten der Verbundscheibe. Die Mehrschichtfolie 8 hat daher keinen Kontakt zur umgebenden Atmosphäre und ist durch die Folien der Zwischenschicht 11 im Bereich der Seitenkanten vorteilhaft vor Korrosion geschützt. Die Mehrschichtfolie 8 ist zudem mit einer umlaufenden Randversiegelung 15 versehen. Die Randversiegelung 15 ist als Polyimid-Folie ausgebildet, welche umlaufend um die Seitenkanten der Mehrschichtfolie 8 verläuft und sich ausgehend von den Seitenkanten einige Millimeter über die von der aktiven Schicht 5 abgewandten Oberflächen der Trägerfolien 9, 10 erstreckt. Die Randversiegelung verhindert die Diffusion von Weichmachern und anderen Kleberbestandteilen der thermoplastischen Folien 12, 13 in die aktive Schicht 5, wodurch die Alterung des Funktionselements 4 vermindert wird.

Zwischen der ersten thermoplastischen Folie 12 mit dem lumineszierenden Material 3 und der Mehrschichtfolie 8 ist eine Barrierefolie 14 angeordnet. Die Barrierefolie 14 besteht aus PET und verhindert eine Diffusion des lumineszierenden Materials 3 aus der ersten thermoplastischen Folie 12 in die zweite thermoplastische Folie 13. Die Barrierefolie 14 ist zudem mit einer nicht dargestellten Infrarot-Schutzbeschichtung versehen. Dadurch wird das Funktionselement 4 vor Alterung durch infrarote Strahlungsanteile des Sonnenlichts geschützt.

Fig. 5 zeigt ein Diagramm von Alterungsmessungen an Verbundscheiben mit elektrisch schaltbaren optischen Eigenschaften. Die Verbundscheiben wurden einem standardisierten Weatherometer (WOM)-Test unterzogen. Dabei wurden die Verbundscheiben mit einer Xenon-Bogenlampe bestrahlt, deren Strahlung das Sonnenspektrum simuliert. Die Außenscheibe 1 war dabei zur Lichtquelle hingewandt angeordnet. Nach der Bestrahlung wurde der Wert $\Delta E$ bestimmt. Der Wert $\Delta E$ gibt die Helligkeits- und Farbänderungen der Verbundscheibe, insbesondere des Funktionselements 4 durch den WOM-Test an. Der Wert $\Delta E$ ist damit ein Maß für die Alterung des Funktionselements 4. Er berechnet sich nach:

$$\Delta E = \sqrt{\left(\frac{\Delta L^*}{2}\right)^2 + \Delta a^{*2} + \Delta b^{*2}}$$

L* ist hierbei der Helligkeitswert, a* und b* die Farbkoordinaten im L*a*b*-Farbraum. $\Delta$ bezeichnet die Differenz der jeweiligen Größe vor und nach dem WOM-Test.

Die Werte $\Delta E$ wurde für ein erfindungsgemäßes Beispiel und zwei Vergleichsbeispiele bestimmt und sind in Figur 5 in Abhängigkeit von der Bestrahlungsdauer aufgetragen. Das erfindungsgemäße Beispiel war eine Verbundscheibe gemäß Figur 3. In die erste thermoplastische Folie 12 war das lumineszierende Material 3 eingelagert. Das Vergleichsbeispiel 1 unterschied sich vom Beispiel durch die erste thermoplastische Folie 12. Die thermoplastische Folie 12 im Vergleichsbeispiel 1 bestand aus Ethylenvinylacetat (EVA), wies eine Dicke von 0,38 mm auf und enthielt kein lumineszierendes Material 3. Die Verbundscheibe im Vergleichsbeispiel 2 war genauso ausgebildet wie im Vergleichsbeispiel 1. Bei der Bestrahlung war allerdings im Vergleichsbeispiel 2 ein optisches Filter zwischen Strahlungsquelle und Verbundscheibe angeordnet, welches für UV-Strahlung sowie für Strahlung im sichtbaren Bereich mit einer Wellenlänge kleiner als 500 nm nicht transparent war.

Aus der Figur 5 ist ersichtlich, dass der Schutz der Verbundscheibe vor UV-Strahlung und Strahlung im kurzwelligen sichtbaren Bereich zu einer deutlich geringeren Alterung des Funktionselements 4 führt. Die Werte $\Delta E$ sind im

Vergleichsbeispiel 2 bei allen Beobachtungszeiten deutlich geringer als im Vergleichsbeispiel. Die Werte ΔE im erfindungsgemäßen Beispiel liegen annähernd auf der gleichen Ausgleichsgeraden wie die Werte ΔE des Vergleichsbeispiels 2. Durch die erfindungsgemäße thermoplastische Folie 12 mit dem lumineszierenden Material 3 wird also ein ebenso effektiver Schutz vor UV-Strahlung und Strahlung im kurzwelligen sichtbaren Bereich erreicht wie durch ein optisches Filter. Dieses Ergebnis war für den Fachmann unerwartet und überraschend.

Fig. 6 zeigt die Transmission einer thermoplastischen Folie aus EVA, einer thermoplastischen Folie aus PVB und einer erfindungsgemäßen thermoplastischen Folie 12 mit eingelagertem lumineszierendem Material 3. Die erfindungsgemäße thermoplastische Folie 12 besteht aus PVB und enthält Diethyl-2,5-dihydroxyterephtalat als lumineszierendes Material 3 mit einer Konzentration von etwa 3,9 kg/m$^3$. Jede thermoplastische Folie weist für UV-Strahlung bis zu einer bestimmten Wellenlänge eine Transmission von etwa 0 % auf. Mit steigender Wellenlänge nimmt die Transmission der thermoplastischen Folien jedoch bis auf einen Maximalwert von etwa 90% zu. Ist die thermoplastische Folie zwischen der Außenscheibe 1 und dem schaltbaren Funktionselement 4 einer Verscheibung mit elektrisch schaltbaren optischen Eigenschaften angeordnet, so kann die transmittierte UV-Strahlung sowie Strahlung im kurzwelligen sichtbaren Bereich zu einer Alterung des Funktionselements 4 führen. Aus dem Diagramm ist ersichtlich, dass eine Folie aus PVB einen geringeren Bereich des UV-Spektrums transmittiert als eine Folie aus EVA. Ist ein lumineszierendes Material in die Folie eingelagert, so wird der transmittierte Strahlungsanteil im UV-Bereich und im kurzwelligen sichtbaren Bereich weiter reduziert. In Tabelle 1 ist die Transmission der Folien bei 380 nm, 390 nm, 400 nm und 410 nm zusammengefasst. Durch die Verwendung der PVB-Folie mit lumineszierendem Material als thermoplastische Folie 12 einer Verscheibung mit elektrisch schaltbaren optischen Eigenschaften kann die Alterung des schaltbaren Funktionselements 4 wirksam vermindert werden (vgl. Figur 5). Dieses Ergebnis war für den Fachmann unerwartet und überraschend.

Tabelle 1

| $\lambda$ | **EVA** | **PVB** | **PVB mit Diethyl-2,5-dihydroxyterephtalat** (3,9 kg/m$^3$) |
|---|---|---|---|
| 380 nm | 1,9% | 0,0% | 0,0% |
| 390 nm | 18,6% | 2,0% | 0,0% |
| 400 nm | 56,6% | 29,5% | 0,2% |
| 410 nm | 79,7% | 70,3% | 6,5% |

Fig. 7 zeigt ein Ausführungsbeispiel des erfindungsgemäßen Verfahrens zur Herstellung einer Verscheibung mit elektrisch schaltbaren optischen Eigenschaften. Das Ausführungsbeispiel führt zu einer erfindungsgemäßen Verbundscheibe nach Fig. 3. Zunächst wird das lumineszierende Material 3 in einem Lösungsmittel auf eine Oberfläche der ersten thermoplastischen Folie 12 aufgebracht. Die Konzentration des lumineszierenden Materials 3 auf der thermoplastischen Folie 12 beträgt dabei beispielsweise 3 g/m$^2$. Die zweite thermoplastische Folie 13 wird auf die Innenscheibe 2 aufgelegt. Die Mehrschichtfolie 8 wird elektrisch kontaktiert und auf die zweite thermoplastische Folie 13 aufgelegt. Die erste thermoplastische Folie 12 wird auf die Mehrschichtfolie 8 aufgelegt. Die Außenscheibe 1 wird auf die erste thermoplastische Folie 12 aufgelegt. Anschließend wird der Stapel unter Einwirkung von Temperatur, Druck und / oder Vakuum zur Verbundscheibe laminiert.

Bezugszeichenliste:

(1) Außenscheibe
(2) Innenscheibe
(3) lumineszierendes Material
(4) Funktionselement mit elektrisch schaltbaren optischen Eigenschaften
(5) aktive Schicht des Funktionselements 4
(6) äußere Flächenelektrode des Funktionselements 4
(7) innere Flächenelektrode des Funktionselements 4
(8) Mehrschichtfolie mit elektrisch schaltbaren optischen Eigenschaften
(9) Trägerfolie der Mehrschichtfolie 8
(10) Trägerfolie der Mehrschichtfolie 8
(11) Zwischenschicht
(12) thermoplastische Folie
(13) thermoplastische Folie

(14) Barrierefolie
(15) Randversiegelung

## Patentansprüche

**1.** Verscheibung mit elektrisch schaltbaren optischen Eigenschaften, mindestens umfassend:

- eine Außenscheibe (1) und
- ein schaltbares Funktionselement (4), welches über zumindest eine thermoplastische Folie (12) flächenmäßig mit der Außenscheibe (1) verbunden ist,

wobei die thermoplastische Folie (12) zumindest ein lumineszierendes Material (3) enthält, wobei die thermoplastische Folie (12) von 0,1 $kg/m^3$ bis 20 $kg/m^3$, bevorzugt von 1 $kg/m^3$ bis 7 $kg/m^3$ des lumineszierenden Materials (3) enthält, wobei das lumineszierende Material (3) ein Anregungsmaximum im Bereich von 350 nm bis 450 nm, bevorzugt 380 nm bis 420 nm aufweist, und wobei das lumineszierende Material (3) über die gesamte Fläche der thermoplastischen Folie (12) homogen verteilt ist.

**2.** Verscheibung nach Anspruch 1, wobei die thermoplastische Folie (12) keine UV-Blocker enthält.

**3.** Verscheibung nach Anspruch 1 oder 2, wobei das Funktionselement (4) zumindest ein organisches Material enthält.

**4.** Verscheibung nach einem der Ansprüche 1 bis 3, wobei das Funktionselement (4) flächenmäßig zwischen zwei Trägerfolien (9, 10) angeordnet ist und wobei eine der Trägerfolien (9, 10) zumindest über die thermoplastische Folie (12) mit der Außenscheibe (1) verbunden ist.

**5.** Verscheibung nach einem der Ansprüche 1 bis 4, wobei auf der von der Außenscheibe (1) abgewandten Oberfläche der thermoplastischen Folie (12) eine Barrierefolie (14) angeordnet ist, welche bevorzugt zumindest Polyethylenterephthalat (PET) enthält.

**6.** Verscheibung nach einem der Ansprüche 1 bis 5, wobei die thermoplastische Folie (12) zumindest Ethylenvinylacetat (EVA) und / oder Polyvinylbutyral (PVB) enthält und bevorzugt eine Dicke von 0,2 mm bis 2 mm aufweist und wobei das lumineszierende Material (3) bevorzugt in die thermoplastische Folie (12) eingelagert ist.

**7.** Verscheibung nach einem der Ansprüche 1 bis 6, wobei das lumineszierende Material (3) ein Emissionsmaximum im Bereich von 410 nm bis 600 nm, bevorzugt von 430 nm bis 500 nm aufweist.

**8.** Verscheibung nach einem der Ansprüche 1 bis 7, wobei das lumineszierende Material (3) zumindest ein Hydroxyalkylterephthalat mit der chemischen Formel R1-COO-Ph(OH)x-COO-R2 enthält, wobei
R1, R2 ein Alkyl- oder Allylrest mit 1 bis 10 C-Atomen ist,
Ph ein Phenylring ist,
OH eine am Phenylring gebundene Hydroxylgruppe ist und
x eine ganze Zahl von 1 bis 4 ist,
bevorzugt zumindest Diethyl-2,5-dihydroxyterephthalat.

**9.** Verscheibung nach einem der Ansprüche 1 bis 8, wobei die thermoplastische Folie (12) im Wellenlängenbereich von 380 nm bis 410 nm eine Transmission kleiner oder gleich 10% aufweist.

**10.** Verscheibung nach einem der Ansprüche 1 bis 9, wobei das Funktionselement (4) ein SPD-, ein PDLC-, ein elektrochromes oder ein elektrolumineszentes Funktionselement ist, bevorzugt ein SPD-Funktionselement.

**11.** Verscheibung nach einem der Ansprüche 1 bis 10, die eine Verbundscheibe aus der Außenscheibe (1) und einer Innenscheibe (2) ist, wobei das Funktionselement (4) flächenmäßig zwischen der Außenscheibe (1) und der Innenscheibe (2) angeordnet ist.

**12.** Verfahren zur Herstellung einer Verscheibung mit elektrisch schaltbaren optischen Eigenschaften, wobei zumindest

a) mindestens ein lumineszierendes Materials (3) auf oder in eine thermoplastische Folie (12) aufgebracht oder

eingebracht wird, wobei die thermoplastische Folie (12) von 0,1 kg/$m^3$ bis 20 kg/$m^3$, bevorzugt von 1 kg/$m^3$ bis 7 kg/$m^3$ des lumineszierenden Materials (3) enthält, wobei das lumineszierende Material (3) ein Anregungsmaximum im Bereich von 350 nm bis 450 nm, bevorzugt 380 nm bis 420 nm aufweist, und wobei das lumineszierende Material (3) über die gesamte Fläche der thermoplastischen Folie (12) homogen verteilt ist,
b) mindestens eine Außenscheibe (1), die thermoplastische Folie (12) und ein schaltbares Funktionselement (4) flächenmäßig in dieser Reihenfolge übereinander angeordnet werden, und
c) das Funktionselement (4) über die thermoplastische Folie (12) mit der Außenscheibe (1) verbunden wird.

**13.** Verwendung einer thermoplastischen Folie (12), welche zumindest ein lumineszierendes Material enthält, in einer Verscheibung mit elektrisch schaltbaren optischen Eigenschaften nach einem der Ansprüche 1 bis 11 zum Schutz des schaltbaren Funktionselements (4) vor UV-Strahlung und Strahlung im kurzwelligen sichtbaren Bereich, insbesondere im Wellenlängenbereich von 380 nm bis 410 nm.

## Claims

**1.** Glazing having electrically switchable optical properties, comprising at least:

- an outer pane (1) and
- a switchable functional element (4) that is areally bonded to the outer pane (1) via at least one thermoplastic film (12),

wherein the thermoplastic film (12) contains at least one luminescent material (3), wherein the thermoplastic film (12) contains from 0.1 kg/$m^3$ to 20 kg/$m^3$, preferably from 1 kg/$m^3$ to 7 kg/$m^3$ of the luminescent material (3), wherein the luminescent material (3) has an excitation maximum in the range from 350 nm to 450 nm, preferably 380 nm to 420 nm, and wherein the luminescent material (3) is distributed homogeneously over the entire area of the thermoplastic film (12).

**2.** Glazing according to claim 1, wherein the thermoplastic film (12) contains no UV blockers.

**3.** Glazing according to claim 1 or 2, wherein the functional element (4) contains at least one organic material.

**4.** Glazing according to one of claims 1 through 3, wherein the functional element (4) is areally arranged between two carrier films (9, 10) and wherein one of the carrier films (9, 10) is bonded to the outer pane (1) at least via the thermoplastic film (12).

**5.** Glazing according to one of claims 1 through 4, wherein a barrier film (14) is arranged on the surface of the thermoplastic film (12) facing away from the outer pane (1), which film preferably contains at least polyethylene terephthalate (PET).

**6.** Glazing according to one of claims 1 through 5, wherein the thermoplastic film (12) contains at least ethylene vinyl acetate (EVA) and / or polyvinyl butyral (PVB) and preferably has a thickness from 0.2 mm to 2 mm and wherein the luminescent material (3) is preferably incorporated into the thermoplastic film (12).

**7.** Glazing according to one of claims 1 through 6, wherein the luminescent material (3) has an emission maximum in the range from 410 nm to 600 nm, preferably from 430 nm to 500 nm.

**8.** Glazing according to one of claims 1 through 7, wherein the luminescent material (3) contains at least one hydroxyalkyl terephthalate with the chemical formula

R1-COO-Ph(OH)x-COO-R2,

where

R1, R2 is an alkyl or allyl radical having 1 to 10 C atoms,
Ph is a phenyl ring,
OH is a hydroxyl group bonded to the phenyl ring, and
x is a whole number from 1 to 4,

preferably at least diethyl 2,5-dihydroxy terephtalate.

**9.** Glazing according to one of claims 1 through 8, wherein the thermoplastic film (12) has transmittance less than or equal to 10% in the wavelength range from 380 nm to 410 nm.

**10.** Glazing according to one of claims 1 through 9, wherein the functional element (4) is an SPD, a PDLC, an electrochromic, or an electroluminescent functional element, preferably an SPD functional element.

**11.** Glazing according to one of claims 1 to 10, which is a composite pane of the outer pane (1) and an inner pane (2), wherein the functional element (4) is arranged areally between the outer pane (1) and the inner pane (2).

**12.** Method for producing a glazing having electrically switchable optical properties, wherein at least

a) at least one luminescent material (3) is applied on or incorporated into a thermoplastic film (12), wherein the thermoplastic film (12) contains from 0.1 $kg/m^3$ to 20 $kg/m^3$, preferably from 1 $kg/m^3$ to 7 $kg/m^3$ of the luminescent material (3), wherein the luminescent material (3) has an excitation maximum in the range from 350 nm to 450 nm, preferably 380 nm to 420 nm, and wherein the luminescent material (3) is distributed homogeneously over the entire area of the thermoplastic film (12),
b) at least one outer pane (1), the thermoplastic film (12), and a switchable functional element (4) are arranged one over another areally in this order, and
c) the functional element (4) is bonded to the outer pane (1) via the thermoplastic film (12).

**13.** Use of a thermoplastic film (12), which contains at least one luminescent material, in a glazing having electrically switchable optical properties according to one of claims 1 through 11 for the protection of the switchable functional element (4) against UV radiation and radiation in the short wavelength visible range, in particular in the wavelength range from 380 nm to 410 nm.

## Revendications

**1.** Vitrage avec des propriétés optiques électriquement commutables, comprenant au moins:

- une vitre extérieure (1) et
- un élément fonctionnel (4) commutable, qui est relié sur toute sa surface à la vitre extérieure par au moins un film thermoplastique (12),

où le film thermoplastique (12) contient au moins un matériau luminescent (3), où le film thermoplastique (12) contient de 0,1 $kg/m^3$ à 20 $kg/ m^3$, de préférence de 1 $kg/m^3$ à 7 $kg/m^3$ du matériau luminescent (3), où le matériau luminescent (3) possède une excitation maximale de l'ordre de 350 nm à 450 nm, de préférence de 380 nm à 420 nm, et où le matériau luminescent (3) est distribué de façon homogène sur toute la surface du film thermoplastique (12).

**2.** Vitrage selon la revendication 1, où le film thermoplastique (12) ne contient aucun bloqueur de rayons UV.

**3.** Vitrage selon la revendication 1 ou 2, où l'élément fonctionnel (4) contient au moins une matière organique.

**4.** Vitrage selon l'une des revendications 1 à 3, où l'élément fonctionnel (4) est disposé sur l'ensemble de la surface entre deux films de support (9, 10) et où l'un des films de support (9, 10) est connecté à la vitre extérieure (1) au moins par le film thermoplastique (12).

**5.** Vitrage selon l'une des revendications 1 à 4, où un film barrière (14), qui contient de préférence au moins du polyéthylène téréphtalate (PET), est disposé sur la surface du film thermoplastique (12) éloignée de la vitre extérieure (1).

**6.** Vitrage selon l'une des revendications 1 à 5, où le film thermoplastique (12) contient au moins de l'éthylène-acétate de vinyle (EVA) et/ou du polyvinyle de butyral (PVB) et de préférence a une épaisseur de 0,2 mm à 2 mm et où le matériau luminescent (3) est monté de préférence dans la film thermoplastique (12).

**7.** Vitrage selon l'une des revendications 1 à 6, où le matériau luminescent (3) possède une émission maximale de

l'ordre de 410 nm à 600 nm, de préférence de 430 nm à 500 nm.

**8.** Vitrage selon l'une des revendications 1 à 7, où le matériau luminescent (3) contient au moins un téréphtalate de hydroxyalkyle avec la formule chimique

R1-COO-Ph(OH)x-COO-R2,

où

R1, R2 est un radical alkyle ou allyle avec 1 à 10 atomes de carbone,
Ph est un noyau phényle,
OH est un groupe hydroxyle lié au noyau phényle, et
x est un nombre entier de 1 à 4,
de préférence au moins du diéthyle-2,5-téréphthalate de dihydroxyle.

**9.** Vitrage selon l'une des revendications 1 à 8, où le film thermoplastique (12) possède dans la gamme de longueurs d'onde de 380 nm à 410 nm, une transmission inférieure ou égale à 10 %.

**10.** Vitrage selon l'une des revendications 1 à 9, où l'élément fonctionnel (4) est un élément fonctionnel SPD, CLDP, électrochrome ou électroluminescent, de préférence un élément fonctionnel SPD.

**11.** Vitrage selon une des revendications 1 à 10, qui est une vitre laminé composée de la vitre extérieure (1) et une vitre intérieure (2), où l'élément fonctionnel (4) est disposé dans la surface entre la vitre extérieure (1) et la vitre intérieure (2).

**12.** Procédé de fabrication d'un vitrage avec des propriétés optiques électriquement permutable, où au moins

a) au moins un matériau luminescent (3) est appliqué sur ou inséré dans un film thermoplastique (12), où le film thermoplastique (12) contient de 0,1 $kg/m^3$ à 20 $kg/m^3$, de préférence de 1 kg / $m^3$ à 7 kg/ $m^3$ de matériau luminescent (3), où le matériau luminescent (3) possède une excitation maximale de l'ordre de 350 nm à 450 nm, de préférence de 380 nm à 420 nm, et où le matériau luminescent (3) est distribué de façon homogène sur toute la surface du film thermoplastique (12),
b) au moins une vitre extérieure (1), le film thermoplastique (12) et un élément fonctionnel (4) commutable sont superposés dans cet ordre sur l'ensemble de la surface, et
c) l'élément fonctionnel (4) est relié à la vitre extérieure (1) par le film thermoplastique (12).

**13.** Utilisation d'un film thermoplastique (12), qui contient au moins un matériau luminescent, dans un vitrage avec des propriétés optiques électriquement commutables selon l'une des revendications 1 à 11, pour la protection de l'élément fonctionnel commutable (4) des rayons UV et le rayonnement dans la zone visible d'ondes courtes, en particulier dans la gamme de longueurs d'onde de 380 nm à 410 nm.

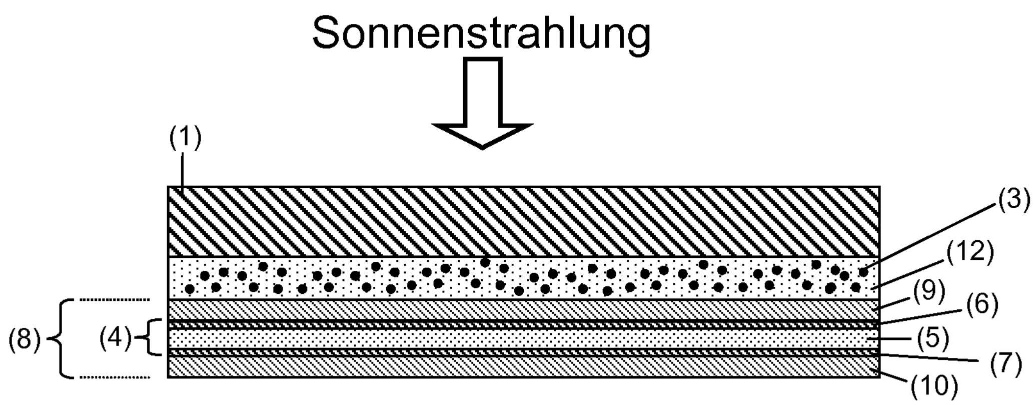
Sonnenstrahlung
(1)
(3)
(12)
(9)
(6)
(8)
(4)
(5)
(7)
(10)

Fig. 1

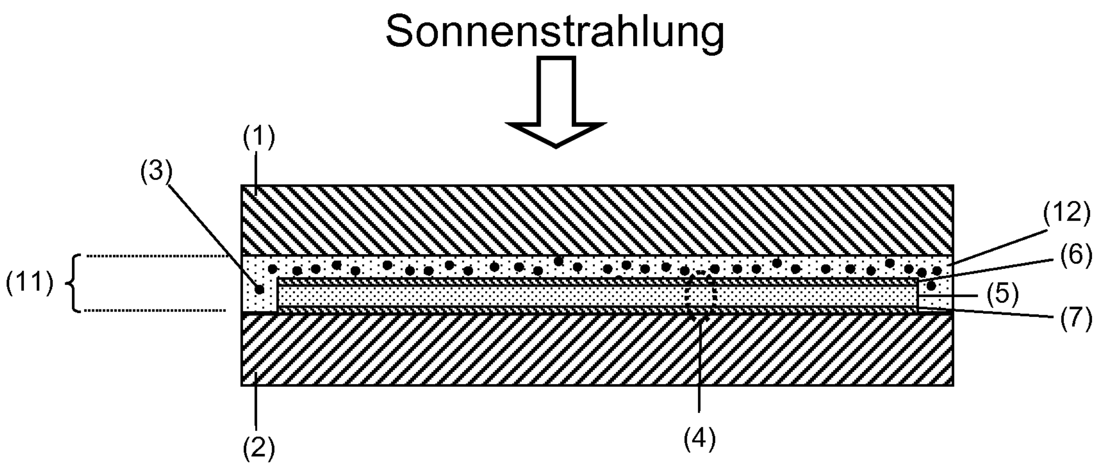
Sonnenstrahlung
(1)
(3)
(12)
(6)
(11)
(5)
(7)
(2)
(4)

Fig. 2

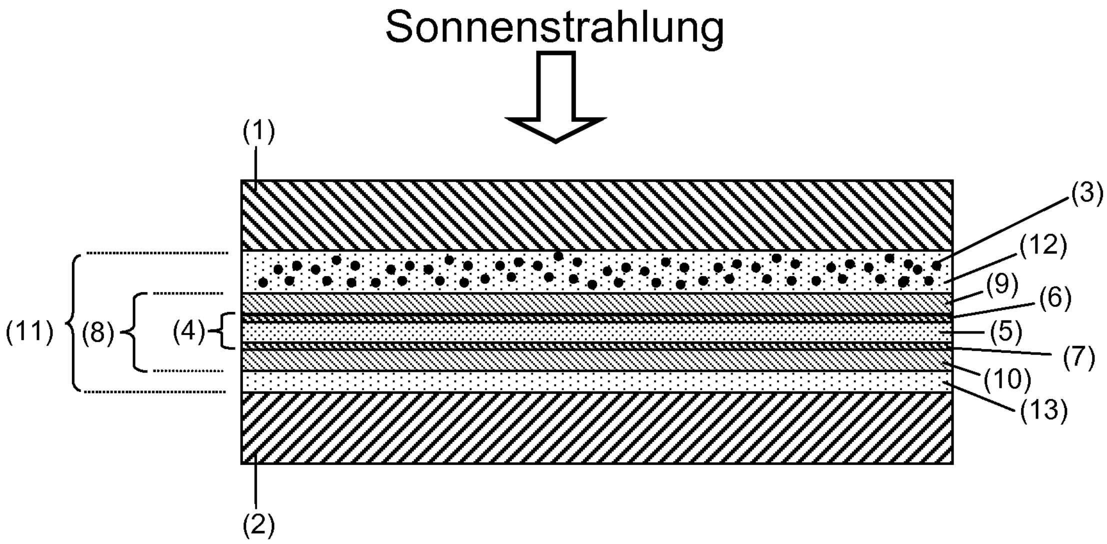
Sonnenstrahlung
(1)
(3)
(12)
(9)
(6)
(11)
(8)
(4)
(5)
(7)
(10)
(13)
(2)

Fig. 3

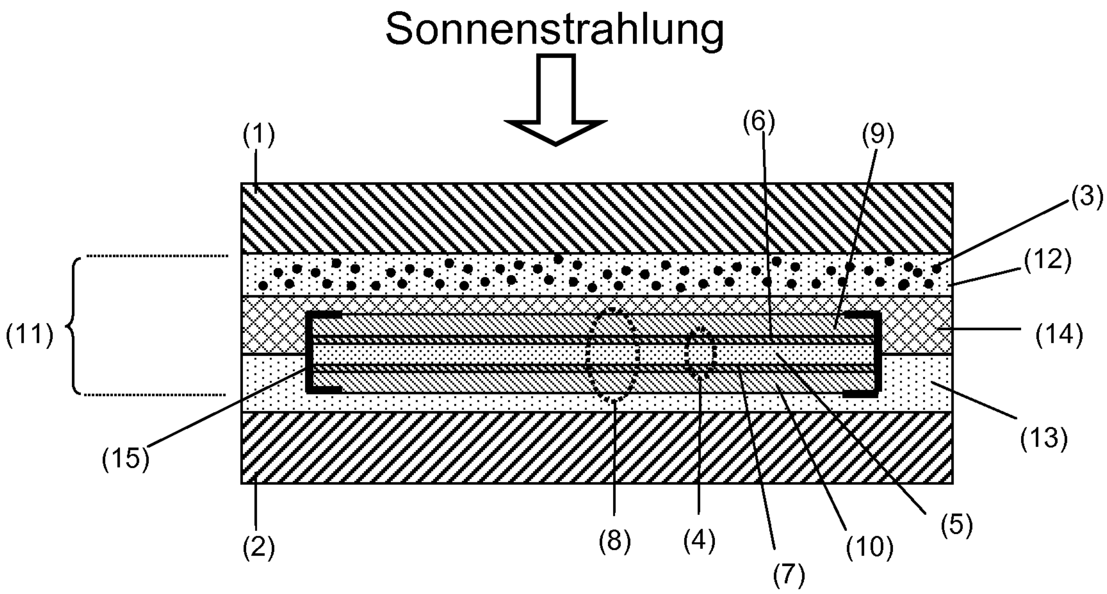
Sonnenstrahlung
(1)
(6)
(9)
(3)
(12)
(11)
(14)
(13)
(15)
(2)
(8)
(4)
(7)
(10)
(5)

Fig. 4

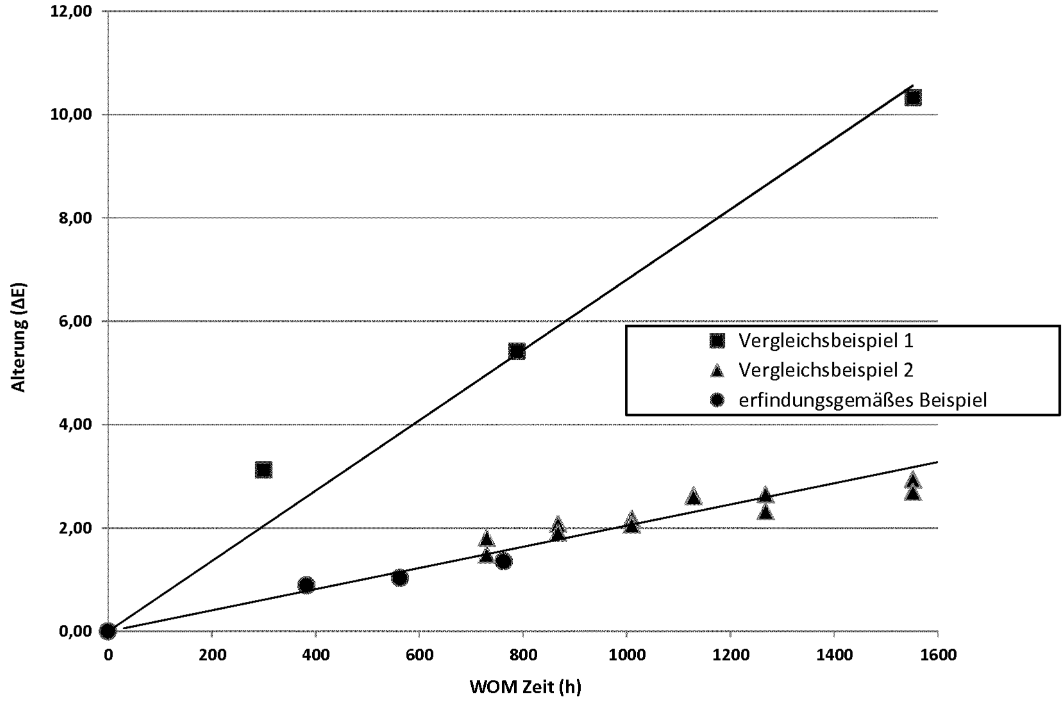
12,00
10,00
8,00
6,00
4,00
2,00
0,00
Alterung (ΔE)
0
200
400
600
800
1000
1200
1400
1600
WOM Zeit (h)
Vergleichsbeispiel 1
Vergleichsbeispiel 2
erfindungsgemäßes Beispiel

Fig. 5

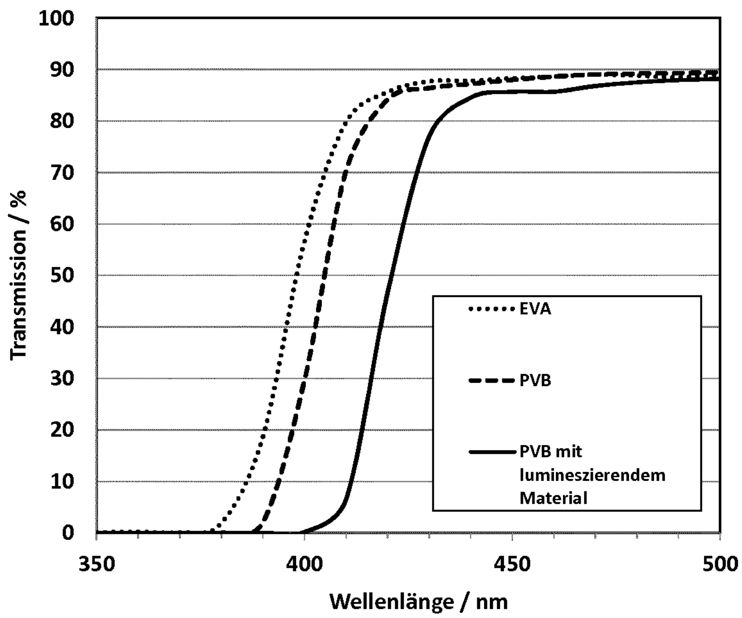
100
90
80
70
60
50
40
30
20
10
0
Transmission / %
350
400
450
500
Wellenlänge / nm
EVA
PVB
PVB mit lumineszierendem Material

Fig. 6

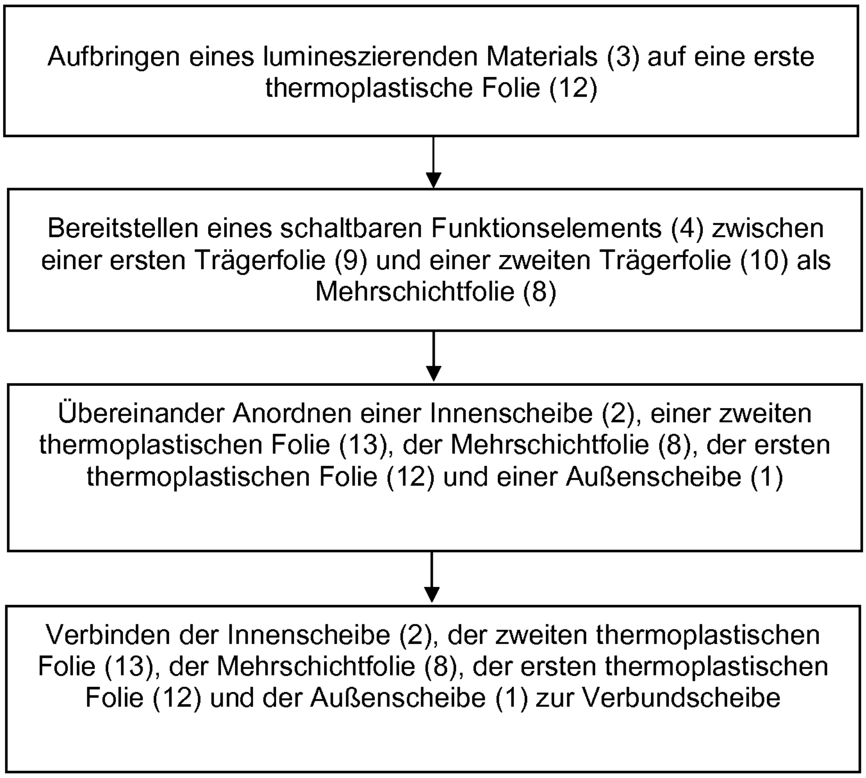
Aufbringen eines lumineszierenden Materials (3) auf eine erste thermoplastische Folie (12)
Bereitstellen eines schaltbaren Funktionselements (4) zwischen einer ersten Trägerfolie (9) und einer zweiten Trägerfolie (10) als Mehrschichtfolie (8)
Übereinander Anordnen einer Innenscheibe (2), einer zweiten thermoplastischen Folie (13), der Mehrschichtfolie (8), der ersten thermoplastischen Folie (12) und einer Außenscheibe (1)
Verbinden der Innenscheibe (2), der zweiten thermoplastischen Folie (13), der Mehrschichtfolie (8), der ersten thermoplastischen Folie (12) und der Außenscheibe (1) zur Verbundscheibe

Fig. 7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 20120026573 A1
- WO 2012007334 A1
- EP 0876608 B1
- WO 2011033313 A1
- WO 2012154663 A1
- WO 2011036010 A
- WO 2010147494 A1
- EP 1862849 A1
- DE 102008026339 A1
- US 2004227462 A1
- WO 2010112789 A2